**Europäisches Patentamt**

**European Patent Office**

**Office européen des brevets**

(19)

(11) Veröffentlichungsnummer : **0 023 591**
**B1**

(12) **EUROPÄISCHE PATENTSCHRIFT**

(45) Veröffentlichungstag der Patentschrift :
**07.12.83**

(21) Anmeldenummer : **80103884.5**

(22) Anmeldetag : **08.07.80**

(51) Int. Cl.³ : **B 22 D 11/16**, F 15 B 20/00,
F 17 D 5/02

(54) **Hydraulische Steuerung mit Rohrbruchsicherung für einen doppelt wirkenden Antriebszylinder zum Positionieren, insbes. einer angetriebenen Führungsrolle in der Strangführung einer Stranggiessanlage.**

(30) Priorität : **17.07.79 DE 2928737**

(43) Veröffentlichungstag der Anmeldung :
**11.02.81 Patentblatt 81/06**

(45) Bekanntmachung des Hinweises auf die Patenterteilung : **07.12.83 Patentblatt 83/49**

(84) Benannte Vertragsstaaten :
**AT BE FR GB IT LU NL SE**

(56) Entgegenhaltungen :
**EP-A- 0 011 329**
**DE-A- 2 707 630**
**DE-A- 2 712 076**
**DE-A- 2 754 886**

(73) Patentinhaber : **MANNESMANN Aktiengesellschaft**
**Mannesmannufer 2**
**D-4000 Düsseldorf 1 (DE)**

(72) Erfinder : **Wetter, Jacob, Ing.grad.**
**Gatherhof 12**
**D-4000 Düsseldorf (DE)**

EP 0 023 591 B1

Hydraulische Steuerung mit Rohrbruchsicherung für einen doppelt wirkenden Antriebszylinder zum Positionieren, insbes. einer angetriebenen Führungsrolle in der Strangführung eine Stranggießanlage

Die Erfindung betrifft eine hydraulische Steuerung mit Rohrbruchsicherung für einen doppelt wirkenden Antriebszylinder zum Verstellen und zur Lagesicherung eines eine betriebsbedingte Gegenkraft auf den Kolben des Zylinders ausübenden Maschinenteils, insbesondere einer angetriebenen Führungsrolle in der Strangführung einer Stranggießanlage, mit einer Hochdruckquelle für einstellbaren konstanten hydraulischen Arbeitsdruck. Die Erfindung bezieht sich damit auf einen Stand der Technik, wie er dem Fachmann auf dem einschlägigen Gebiet geläufig ist.

Antriebszylinder, die im Betriebszustand keine Bewegung ausführen, also lediglich eine « Druckhaltefunktion » haben, können gegen einen Rohrbruch in einer Druckleitung im einfachsten Falle mit einem Rückschlagventil abgesichert werden. Dabei ist der Zufluß zu einer Kolbendruckfläche möglich, wogegen der Rückfluß bei Rohrbruch dadurch unterbunden ist, daß der Ventilkegel des Rückschlagventils bereits in Schließposition ist. Die Sicherungsfunktion ist gewährleistet, ohne daß das Rückschlagventil eine Schaltfunktion ausübt.

Die DE-A1-27 12 076 zeigt eine solche Rohrbruchsicherung für Aufzugeinrichtungen oder dergleichen, bei der dem Antriebszylinder ein Rückschlagventil ohne Schaltfunktion vorgeordnet ist, das beim Heben einer Last mit Zeitverzug schließt, um ein Abfallen der Last zu verhindern. Daran ändert sich nichts dadurch, daß das Rückschlagventil und zwei diesem Ventil parallelgeschaltete Pilotventile die Manövrierfähigkeit der Steuerung beim Absenken der Last erhalten, wenn ein Rohrbruch auftritt, bzw. als Überlastsicherung wirken. Die externen Lecköverluste werden dadurch in Grenzen gehalten, daß das Rückschlagventil und die Pilotventile als leckagefreie Ventile ausgeführt sind, da sie in einen Steuerblock eingebaut sind. Was die internen Lecköverluste innerhalb des Antriebszylinders anbelangt, so ist es denkbar, einen Druckhaltespeicher über ein weiteres Rückschlagventil an die Verbindungsleitung zwischen dem Rohrbruch-Rückschlagventil und dem Antriebszylinder anzuschließen, um einen nachhaltigen Druck auf einer Kolbendruckfläche des Antriebszylinders aufrechtzuerhalten, wenn der Arbeitsdruck durch Rohrbruch wegfällt.

Für hydraulische Aufzüge oder dergleichen ist eine Rohrbruchsicherung bekannt (DE-A1-26 39 225), bei der ein quer zur Druckleitung eingebauter Schließkolben bei Rohrbruch als Fangventil wirkend den Rückfluß von Druckmittel verhindert. Der Schließkolben ist entgegen Schließrichtung federbelastet und wird durch einen Steuerdruck in Schließrichtung beaufschlagt, der bei Rohrbruch vor einer Blende in der Druckleitung aufgebaut wird. Die Schließfunktion ist dabei gedämpft.

Weiterhin ist eine elektronisch gesteuerte Rohrbruchsicherung bekannt (DE-A1-27 07 630), die in der Zuführungsleitung zum Arbeitszylinder Geräte zur Messung der Strömung vorsieht und mit dem daraus gewonnenen Meßsignal gesteuerte Eingriffe in Schaltventile vornimmt. In erster Linie soll, neben der Sicherungsmöglichkeit eines einzelnen Zylinders, bei zwei parallel zueinander arbeitenden Antriebszylindern der zweite Zylinder dann mitblockiert werden, wenn der erste Zylinder bei Rohrbruch in seiner Lage festgelegt ist. Es soll der eine Zylinder nicht weiterfahren können, wenn der andere Zylinder steht. Auch schon bei Schieflage beider Zylinder zueinander erfolgt ein Halt, womit ein Ungleichlauf verhindert ist. Diese Rohrbruchsicherung gewährleistet zwar mit hohem elektronischen Aufwand den sofortigen Stillstand von Antriebszylindern, jedoch ohne Kompensation von Lecköverlusten.

Die bekannten Rohrbruchsicherungen sind als bloße sogenannte Rückflußverhinderer anzusehen, bei denen mehr oder weniger schnell das Zurückweichen des belasteten Kolbens des Antriebszylinders verhindert wird, ggf. sogar gedämpft. Nicht erfüllbar ist die Forderung, daß der Antriebs- bzw. Anstellzylinder während des Betriebszustandes « atmen » kann, um bei sich ändernden Bedingungen, beispielsweise hervorgerufen durch eine Temperaturänderung im ausgeförderten Strang einer Stranggießanlage, zur Vermeidung von Lagerbeschädigungen oder Bruch der Führungsrollen begrenzt nachgiebig zu sein. Andererseits darf im Falle des Rohrbruches der Kolben des Antriebszylinders aber nicht zurückweichen ; er muß vielmehr die eingestellte exakte Lage ohne Zeitverzögerung bei Druckabfall einhalten, wobei jedoch auch bei vorliegendem Rohrbruch dann noch gewährleistet sein muß, daß bei auftretenden höheren Belastungen der Zylinderkolben begrenzt nachgibt. Wenn darüber hinaus die Ventile der hydraulischen Steuerung nicht leckagefrei sind, führen die Leckageverluste zu einem unerwünschten Zurückweichen des Zylinders. Da an nicht leckagefreien Ventilen ca. 1/2 l Drucköl pro Minute austreten kann, bedeutet dies, daß der Druck innerhalb weniger Sekunden unzulässig abfällt. Diese Lecköverluste sind auch nicht ausreichend von einem Druckhaltespeicher auszugleichen, der über den benötigten längeren Zeitraum allerdings auf jeden Fall die internen Lecköverluste ausgleicht, die am Antriebszylinder, dort allerdings nur in sehr viel geringerem Maße, auftreten.

Die Erfindung geht jedoch von solchen hydraulischen Steuerungen mit Rohrbruchsicherung aus, bei denen der Antriebszylinder während des Betriebszustandes « atmen » oder sogar eine Hubbewegung unter konstantem Druck ausführen soll. Dann muß der Antriebszylinder über ein geöffnetes Ventil, z. B. ein entsperrbares Rückschlagventil, mit der Druckquelle verbunden sein, das während des normalen Betriebes offen gehalten wird und bei Rohrbruch durch eine aktive Schaltfunktion geschlossen wird. Diese Schaltfunktion wird durch ein vom Druckabfall oder einer Volumenstromänderung abhängiges Signal ausgelöst, wie es bei der elektronischen Lösung gemäß der DE-A1-27 07 630 vorgezeichnet ist. Innerhalb der Zeitspanne jedoch, die von einem Rohrbruch bis zum geschalteten Schließen eines Schaltventils, z. B. eines entsperrbaren Rückschlagventils, vergeht, erfährt die aktive Kolbendruckfläche des Antriebszylinders einen kurzzeitigen Druckabfall, verbunden mit einem Ausweichen des Kolbens, bis nach dem Schließen des Sperrventils der Druck im Antriebszylinder wieder hergestellt ist.

Ein derartiges Zurückweichen des Kolbens eines hydraulischen Anstell- oder Antriebszylinders ist insbesondere dann unerwünscht, wenn der Antriebszylinder zum Verstellen und zur Lagesicherung einer angetriebenen Führungsrolle in der Strangführung einer Stranggießanlage dient. Das Zurückweichen der Strangführungsrollen in diesem Bereich als Folge eines Rohrbruches führt zu Strangausbeulungen und Strangdurchbrüchen, was meist einen langzeitigen Stillstand der Stranggießanlage zur Folge hat. Da ferner die Antriebszylinder der Führungsrollen einer Strangführung beim Gießprozeß über geöffnete Steuerventile mit der Druckquelle verbunden sind, die üblicherweise aus durckgeregelten Pumpen und einem System von Druckspeichern besteht, damit interne und externe Leckölverluste in der Steuerung und an den Antriebszylindern kompensiert werden können, führt ein Rohr- oder Schlauchbruch neben den erwähnten Nachteilen im Zusammenhang mit dem Zurückweichen der Führungsrollen auch dazu, daß das Druckmedium solange an der Bruchstelle austritt, bis das Bedienungspersonal auf den Bruch aufmerksam wird. Da Bruchstellen meist in der Nähe des noch glühenden Stranges liegen, können durch das austretende Hydrauliköl Brände entstehen.

Die Erfindung geht von der Voraussetzung einer Rohrbruchsicherung mit aktiver Schaltfunktion aus, d. h. von einer hydraulischen Steuerung, die während des Betriebszustandes ein « Atmen » des Antriebszylinders unter anstehendem Hochdruck aus der Druckquelle erlaubt. Es ist die Aufgabe gestellt, das Zurückweichen des Kolbens des Anstellzylinders während der aktiven Schaltfunktion zum Schließen des Sperrventils bei Rohrbruch zu vermeiden. Mit anderen Worten : trotzdem der Kolben des Antriebszylinders unter einer sich ändernden betriebsbedingten Gegenkraft während des normalen Betriebszustandes unter konstantem Druck der Druckquelle Ausweichbewegungen ausführen kann, soll bei Rohrbruch der hydraulische Druck im Zylinder unabhängig von der Dauer der aktiven Schaltfunktion zum Schließen des Sperrventils aufrechterhalten bleiben.

Die Lösung dieser Aufgabe besteht aus den im Anspruch 1 angegebenen Merkmalen. Durch die Erfindung wird erreicht, daß das Sperrventil stets in Schließposition ist, die als eine « Quasi-Schließposition » bezeichnet werden kann, da sie ein « Atmen » des Antriebszylinders mit Druckerhöhung im Zylinderdruckraum des Antriebszylinders während des normalen Betriebes erlaubt. Wesentlich ist, daß dann, wenn über einen Rohrbruch die aktive Schaltfunktion zum Umschalten des Vorsteuerventils eingeleitet wird, das Sperrventil bereits in Schließposition ist, die über das um-gesteuerte Vorschaltventil auch beim Wirksamwerden des Druckhaltespeichers fixiert ist. Bei der Anwendung der hydraulischen Steuerung gemäß der Erfindung auf die Steuerung von Antriebszylindern von Führungsrollen einer Stranggießführung wird hierdurch der Vorteil erhalten, daß der Strang keine Ausbauchungen erfährt und die Gefahr von Strangdurchbrüchen somit gemildert wird. Da in einer Stranggießanlage die Führungsrollen über jeweils ein Paar von Antriebszylindern normalerweise gegen feste Anschläge angestellt werden, die die Dicke des herzustellenden Stranges bestimmen, ist die Funktion des « Atmens » der Antriebszylinder mehr für die angetriebenen Führungsrollen gedacht, die auch für den Transport des Kaltstranges bzw. Anfahrstranges dienen.

Das zum normalerweise geschlossenen Sperrventil parallele Rückschlagventil ermöglicht einen Durchfluß von der ersten Hauptsteuerleitung zum Zylinder bei einer gesteuerten Anstellbewegung.

Die am Hauptsteuerventil in den beiden zum Antriebszylinder führenden Hauptsteuerleitungen vorgesehene dritte Schaltstellung zum Entlasten beider Hauptsteuerleitungen bei Rohrbruch führt dazu, daß mit dem Rohrbruch beide Steuerleitungen drucklos werden und der Austritt von Hydrauliköl an der Bruchstelle und somit die Gefahr von Bränden auf ein Minimum herabgemindert wird.

Das Sperrventil und das Vorsteuer-Schaltventil sollen in leckagefreier Bauart ausgeführt sein, damit diese Ventile einen gleichhohen Grad an Funktionssicherheit besitzen, wie der Antriebszylinder selbst. Das Sperrventil ist dabei zur Leckgefreiheit in Cartridge-Bauart ausgeführt. Im Gegensatz zu Ventilen mit Gehäusen versteht man hierunter ein Ventil ohne Gehäuse, das in einen Gehäuseblock, beispielsweise einen Steuerblock, eingebaut wird.

Das Druckbegrenzungsventil zwischen Hochdruck- und Niederdruckseite des Anstellzylinders verhindert die Entstehung eines zu hohen Druckes auf der Hochdruckseite des Anstellzylinders aufgrund von Temperaturerhöhungen und ist an sich bekannt.

Weitere Ausgestaltungen der erfindungsgemäßen hydraulischen Steuerung sind in den Ansprüchen 2 bis 4 angegeben.

In der Zeichnung ist ein Ausführungsbeispiel einer hydraulischen Steuerung mit Rohrbruchsicherung gemäß der Erfindung dargestellt, und zwar zeigt

Figur 1 einen vereinfachten Schaltplan für die Steuerung in Verbindung mit einem Antriebszylinder für eine Führungsrolle einer Stranggießanlage, und

Figur 2 eine Teildarstellung aus Fig. 1 mit dem Sperrventil und dem im Querschnitt dargestellten Vorsteuer-Schaltventil.

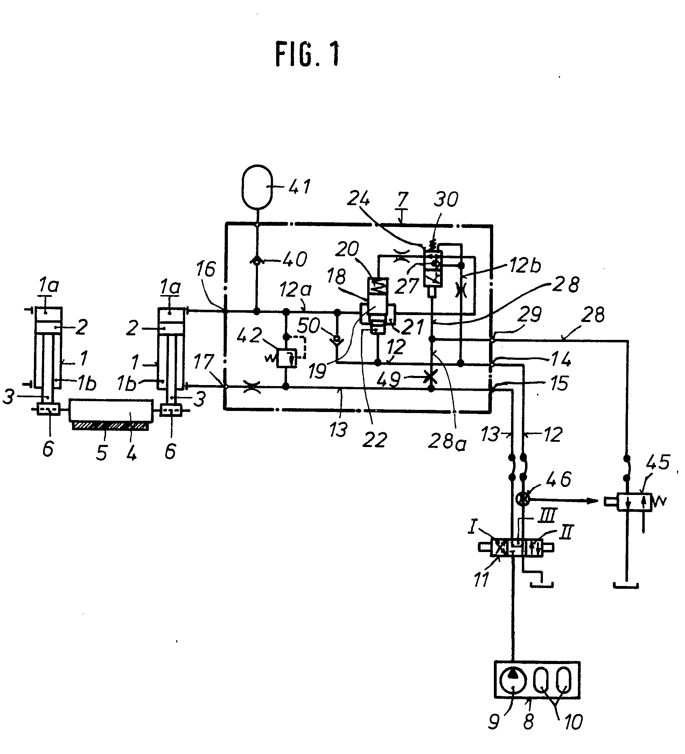

Die in Fig. 1 dargestellte hydraulische Steuerung mit Rohrbruchsicherung dient zum Betätigen eines Paares von Antriebszylindern 1 mit Kolben 2 und Kolbenstangen 3 für eine angetriebene Führungsrolle 4 in der Strangführung einer Stranggießanlage für Brammen 5. Die Kolbenstangen 3 beider Antriebszylinder 1 drücken auf schematisch dargestellte Lager 6 der Führungsrolle 4. Jedem Antriebszylinder 1 ist eine Rohrbruchsicherung 7 zugeordnet, die durch strichpunktierte Linien umrissen ist und in der Praxis einen Steuerblock darstellt, an den jeweils ein Antriebszylinder 1 unmittelbar angeflanscht wird. Beiden doppelt beaufschlagbaren Antriebszylindern 1 ist jedoch eine gemeinsame hydraulische Steuerung für die reversierbaren Anstellbewegungen der Kolbenstangen 3 zugeordnet.

Die hydraulische Steuerung besteht aus einer Hochdruckquelle 8 mit Regelpumpe 9 und Druckspeichern 10 zur Lieferung eines einstellbaren, konstanten hydraulischen Arbeitsdruckes. Der Hochdruckquelle 8 ist ein Hautsteuerventil 11 mit den Schaltstellungen I, II und III zugeordnet. Die Schaltstellungen I und II dienen zum wechselweisen Steuern der Hauptsteuerleitungen 12 und 13 auf Arbeitsdruck und Rücklauf, um in den Antriebszylindern 1 Anstellbewegungen der Kolbenstangen 3 in beiden Richtungen ausführen zu können, und die mittlere Schaltstellung III dient zum Entlasten beider Hauptsteuerleitungen bei Rohrbruch. In der Schaltstellung I steht die Hauptsteuerleitung 12 unter Druck, die letztlich über je eine Rohrbruchsicherung 7 in den Druckraum 1a der Zylinder 1 einmündet, um die Führungsrolle 4 mit einer einstellbaren, konstanten Kraft gegen die Bramme 5 gedrückt zu halten.

Das Kernstück der hydraulischen Steuerung gemäß der Erfindung, die Rohrbruchsicherung 7, wird im folgenden nur in Verbindung mit einem der beiden Antriebszylinder 1 erläutert. Die Rohrbruchsicherung hat zwei Eingänge 14, 15 für die beiden Hauptsteuerleitungen 12, 13 sowie korrespondierende Ausgänge 16 u. 17, die in die beiden Druckräume 1a und 1b eines der beiden Antriebszylinder 1 einmünden. Die Rohrbruchsicherung 7 umfaßt ein leckagefreies Sperrventil 18 in Cartridge-Bauart, das wegen der direkten Anflaschung des Antriebszylinders 1 an die Rohrbruchsicherung 7 in der Nähe dieses Zylinders angeordnet ist. Dieses Sperrventil 18 liegt innerhalb der ersten, normalerweise arbeitsdruckführenden Hauptsteuerleitung 12, die bei 14 in die Rohrbruchsicherung einmündet und deren Arbeitsdruck im Druckraum 1a des Zylinders 1 entgegengesetzt zu einer betriebsbedingten Gegenkraft einwirkt, die von der Führungsrolle 4 aus auf dem Kolben 2 des Zylinders 1 lastet. Der Leitungsfortsatz der Hauptsteuerleitung 12 innerhalb der Rohrbruchsicherung 7 hinter dem Sperrventil 18 ist mit 12a bezeichnet.

Das Sperrventil 18 hat einen Ventilkolben 19 mit drei Steuerflächen, nämlich einer größten Fläche F 1, die in Schließrichtung durch eine Feder 20 federbelastet ist, eine Kreisringfläche F 2 innerhalb eines Ringraumes 21 des Sperrventils 18, der ausgangsseitig über den Leitungsfortsatz 12a mit dem korrespondierenden Arbeitsdruckraum 1a im Antriebszylinder 1 kommuniziert, und eine sitzseitige Stirnfläche F 3, in deren Druckraum 22 die Hauptsteuerleitung 12 einmündet. Die größte Kolbenfläche F 1 ist gleich der Summe der beiden anderen Kolbenflächen F 2 + F 3, so daß der Ventilkolben 19 ausschließlich unter dem leichten Druck der auf die größte Kolbenfläche F 1 einwirkenden Druckfeder 20 schließt und geschlossen gehalten wird, wenn alle Kolbenflächen vom gleichen hydraulischen Druck beaufschlagt sind.

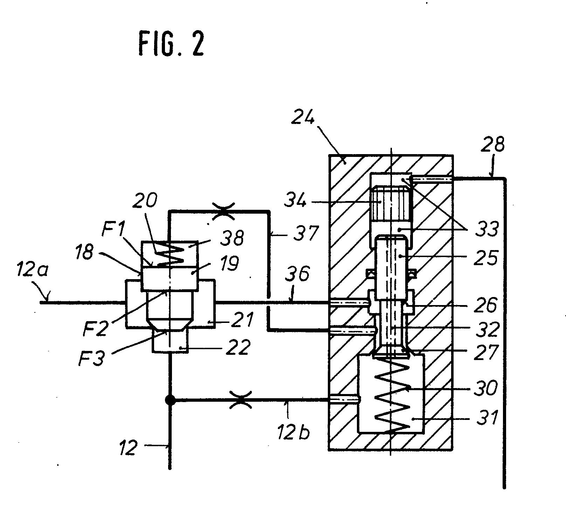

Dem Sperrventil 18 ist ein leckagefreies Vorsteuer-Schaltventil 24 zugeordnet, das in Fig. 1 als Sinnbild dargestellt ist und in Fig. 2 im Schnitt. Der Aufbau des Vorsteuer-Schaltventils 24 wird zweckmäßig anhand des Schnittbildes in Fig. 2 näher erläutert, wobei korrespondierende Bezugszeichen im Sinnbild nach Fig. 1 wiederholt sind.

Das Vorsteuerventil 24 hat einen Schieber 25 mit einer Steuerkante 26 und einem Sitzringventil 27, wodurch das Vorsteuerventil als leckagefrei bezeichnet werden kann. In der abwärtsgerichteten Stellrichtung des Schiebers 25 ist seine Stirnfläche von einem Vorsteuerdruck beaufschlagt, der über die Leitung 28 herangeführt wird. Die Leitung 28 ist über den Eingang 29 an die Rohrbruchsicherung 7 angeschlossen. Der Vorsteuerdruck in der Leitung 28 steht normalerweise an und fällt bei Rohrbruch weg, wie noch erläutert wird. In der anderen Stellrichtung ist der Schieber 25 durch eine leichte Feder 30 federbelastet. Die Feder 30 liegt in einem Druckraum 31, in den eine Zweigleitung 12b der ersten Hauptsteuerleitung 12 einmündet, die normalerweise Arbeitsdruck führt. Der Schieber 25 hat einen mittigen Durchgang 32, der den Druckraum 31 mit dem Druckraum 33 des Vorsteuerdruckes verbindet, so daß der Schieber 25 vom hohen Arbeitsdruck in der ersten Hauptsteuerleitung 12 druckentlastet ist, womit die Kraft der Druckfeder 30 klein sein kann, um den Schieber 25 bei Wegfall des Vorsteuerdruckes in der Leitung 28 zu verstellen. Der Druckraum 33 ist im übrigen noch durch einen schwimmenden Kolben 34 unterteilt, um den Kreislauf des Vorsteuerdruckes von demjenigen des Arbeitsdruckes zu trennen.

Das Vorsteuer-Schaltventil 24 hat neben dem bereits erwähnten Eingang für den Leitungszweig 12b zwei Eingänge für Leitungen 36, 37, von denen die Leitung 36 zum Ringraum 21 mit der Kreisringfläche F 2 und die Leitung 37 zum federbelasteten Druckraum 38 mit der größten Kolbenfläche F 1 des Stellventils 18 führt. In der in Fig. 2 dargestellten Stellung des Schiebers 25 des Vorsteuerventils 24 ist das Sitzringventil 27 geschlossen und sind die beiden Leitungen 36 und 37 aufgrund der Lage der Steuerkante 26 miteinander in kommunizierender Verbindung. In einer anderen Schaltstellung ist die Leitung 36 durch die Steuerkante 26 abgesperrt und das Sitzringventil 27 geöffnet, so daß der Arbeitsdruck aus der ersten Haupsteuerleitung 12 über die Leitung 37 im Druckraum 38 des Sperrventils 18 ansteht.

Zurückkommend auf die Rohrbruchsicherung 7 in Fig. 1 ist der Leitungsfortsatz 12a für Arbeitsdruck über ein Rückschlagventil 40 mit einem Druckhaltespeicher 41 verbunden, aus dem in an sich bekannter Weise der Haltedruck für den Antriebzylinder 1 bei Rohrbruch geliefert wird, wobei dann das Sperrventil 18 selbstverständlich geschlossen ist. Ferner ist zwischen dem Leitungsfortsatz 12a der den konstanten hohen Arbeitsdruck führenden Hauptsteuerleitung 12 ausgangsseitig vom Sperrventil 18 und der zweiten Hauptsteuerleitung 13, die sich vom Eingang 15 zum Ausgang 17 der Rohrbruchsicherung 7 erstreckt und dann in den Druckraum 1b des Zylinders 1 einmündet, ein Druckbegrenzungsventil 42 zwischengeschaltet, um den maximalen Druckabfall zwischen der Hochdruck- und Niederdruckseite des Zylinders 1 zu begrenzen. Auch dies ist an sich bekannt.

Letztlich bleibt noch zu beschreiben, wohin die den Vorsteuerdruck führende Leitung 28 führt und auf welche Weise der Vorsteuerdruck erzeugt wird und bei Rohrbruch wegfällt, außer in dem Sonderfall, daß die Vorsteuerleitung 28 selbst bricht. Die Steuerleitung 28 führt zu einem Zweiwegeventil 45, das bei externer Vorsteuerung die Vorsteuerleitung 28 mit einer nicht dargestellten Druckquelle für Vorsteuerdruck verbindet. In der normalerweise hohen Arbeitsdruck führenden ersten Hauptsteuerleitung 12 ist ein volumetrisches Strömungsmeßgerät 46 eingebaut mit einem Signalgeber, der bei Rohrbruch in der Hauptsteuerleitung ein Signal zum Umschalten des Zweiwegeventils 45 abgibt, wodurch die Leitung 28 und der Druckraum 33 im Vorsteuerventil 24 entlastet wird. Wie in fig. 1 durch die Stellung des Zweiwegeventils 45 dargestellt ist. Ein volumetrisches Strömungsmeßgerät beispielsweise nach dem Zahnradpumpenprinzip wird vorgezogen, weil dann auch kleinste Leckage-mengen im System angezeigt und gemeldet werden können. Selbstverständlich ist die Signalabgabe vom Strömungsmeßgerät 46 an die Steuerung des Zweiwegeventils 45 so ausgelegt, daß nur bei Rohrbruch bzw. großen Leckagemengen das Zweiwegeventil 45 umgeschaltet wird.

Die Wirkungsweise der beschriebenen hydraulischen Steuerung mit Rohrbruchsicherung ist folgende :

Normalerweise steht das Hauptsteuerventil in Schaltstellung I, so daß die erste Hauptsteuerleitung 12 über das Sperrventil 18 den Arbeitsdruck im Druckraum 1a des Zylinders 1 aufrecht erhält. Der Kolben 19 des Sperrventils 18 steht dabei in « Quasi-Schließstellung », was bedeutet, daß er bei einem geringen Druckanstieg in dem Ringraum 21 des Sperrventils 18 öffnet und durch die Freigabe des Leitungsfortsatzes 12a sowie des Druckraumes 1a mit der Hauptsteuerleitung 12 dafür sorgt, daß der Arbeitsdruck im Druckraum 1a konstant gehalten wird. Dieser Effekt begründet das erwünschte « Atmen » des Zylinders 1, wenn von der Bramme 5 aus über die Führungsrolle 4 betriebsbedingt eine höhere Gegenkraft auf die Kolbenstange 3 und den Kolben 2 einwirkt als normalerweise vorhanden ist. Diese Quasi-Schließlage des Sperrventils 18 begründet sich auf folgendem :

Da der Schieber 25 des Vorsteuerventils 24 bei anstehendem Vorsteuerdruck in dem Druckraum 33 entgegen der Feder 30 abwärts gesteuert ist, ist die Leitung 36 zum Ringraum 21 des Sperrventils 18 abgesperrt, wogegen die Leitungen 12, 12b und 37 über das geöffnete Sitzringventil 27 kommunizieren. Auf allen drei Steuerflächen F 1, F 2 und F 3 lastet somit der gleiche hydraulische Druck, nämlich der Arbeitsdruck. Aufgrund der Tatsache, daß F 1 gleich F 2 × F 3 ist, ist der Ventilkolben 19 kräftemäßig indifferent und unterliegt lediglich dem Druck der schwachen Druckfeder 20 im Druckraum 38, die den Ventilkolben leicht an seinen Sitz im Bereich der Steuerfläche F 3 geschlossen hält. Eine geringe Druckerhöhung im Druckraum 1a des Zylinders 1 führt im über die Leitung 36 abgesperrten Ringraum 21 des Sperrventils 18 zu einer Druckerhöhung, die aufgrund der Kreisringfläche F 2 eine entgegengesetzt zur Kraft der Feder 20 wirkende Kraft auslöst, die die Kraft der Feder 20 überwindet und das Sperrventil 18 öffnet.

Wenn bei einem Rohrbruch das Strömungsmeßgerät 46 anspricht und ein Signal zum Umsteuern des Zweiwegeventils 45 abgibt, wird die Vorsteuerleitung 28 und der Druckraum 33 im Vorsteuerventil 24 entlastet. Momentan schließt die Feder 30 im Vorsteuerventil das Sitzringventil 27, und gleichzeitig gibt die Steuerkante 26 die kommunizierende Verbindung zwischen den beiden Leitungen 36 und 37 frei, was der in Fig. 2 und auch im Sinnbild des Vorsteuerventils 24 in Fig. 1 dargestellten Schaltstellung entspricht. Die Folge hiervon ist, daß die durch den Rohrbruch drucklos gewordene erste Hauptsteuerleitung 12 nicht nur gegenüber dem Druckraum 31 im Vorsteuerventil abgesperrt ist, sondern daß im Druckraum 38 des Sperrventils 18 nunmehr der Druck aus dem Ringsraum 21 ansteht, der vom Druckhaltespeicher 41 über das sich öffnende Rückschlagventil 40 in den Leitungsfortsatz 12a eingespeist wird. Da die stirnseitige Steuerfläche F 3 des Ventilkolbens 19 bei Rohrbruch entlastet ist, wirkt auf den Ventilkolben 19 die Differenzkraft P × F 1 − P × F 2, wenn P der Druck im Druckhaltespeicher 41 ist zuzüglich der Druck der Feder 20. Das Sperrventil 18 ist nunmehr in einer tatsächlichen unveränderlichen Schließstellung, bis in der Hauptsteuerleitung 12 wieder Druck herrscht.

Damit bei einem Rohrbruch in der normalen Schaltstellung I des Hauptsteuerventils 11 nicht die gesamte Tankfüllung ausgefördert wird, wird das Hauptsteuerventil 11 in die mittlere Schaltstellung III umgesteuert, in der beide Hauptsteuerleitungen 12 und 13 druckentlastet sind. Diese Umsteuerung wird in nicht näher dargestellter Weise auch vom Signal des Strömungsmeßwertgebers 46 gleichzeitig mit dem Umsteuern des Zweiwegeventils 45 auslöst.

Der wesentlichste Vorteil der hydraulischen Steuerung mit Rohrbruchsicherung gemäß der Erfindung besteht darin, daß das Sperrventil 18 im Normalbetrieb den Rohrbruch in Schließstellung erwartet, so daß beim Wegfall des Arbeitsdruckes in der Hauptsteuerleitung 12 der Druck im Druckraum 1a des Antriebszylinders 1 momentan vom Druckhaltespeicher 41 gehalten wird, so daß die Führungsrolle 4 nicht zurückweichen kann und Ausbauchungen im Strang 5 und in deren Folge Strangdurchbrüche vermieden werden. Die Schließstellung des Ventilkolbens 19 ist aber nur eine Quasischließstellung, da — wie vorher beschrieben — der Ventilkolben 19 gegen die klein eingestellte Kraft der Feder 20 leicht öffnen kann.

Wie schon erwähnt ist von einer externen Vorsteuerung zu sprechen, wenn der Vorsteuerdruck im Druckraum 33 des Vorsteuerventils 24 von außen durch eine besondere Druckquelle bereitgestellt wird. Die Rohrbruchsicherung 7 ist auch für eine interne Vorsteuerung eingerichtet dadurch, daß das Vorsteuerventil bzw. die Vorsteuerleitung 28 über eine absperrbare Zweigleitung (28a) (Fig. 1) mit der zweiten Hauptsteuerleitung 13 in Verbindung gebracht wird und nicht mit dem Zweiwegeventil 45 in Verbindung steht, das bei der internen Vorsteuerung nicht vorhanden oder defekt ist. Diese Maßnahme hat folgende Bedeutung :

Der Druckfluß von der Druckquelle 8 bis 10 zum Zylinder 1 ist durch ein parallel zum Sperrventil 18 angeordnetes und gleichsinnig federbelastetes Rückschlagventil 50 gewährleistet, das zwischen dem Leitungsfortsatz 12a ausgangsseitig vom Sperrventil 18 und der ersten Hauptsteuerleitung 12 liegt. Der Rückfluß vom Zylinder 1 zur Druckquelle hingegen bleibt gesperrt, weil das Sperrventil 18 ebenso wie das Rückschlagventil 50 geschlossen ist, wenn der Vordruck in der Leitung 28 fehlt. Wenn aber beim Umsteuern des Hauptsteuerventils 11 die zweite Hauptsteuerleitung 13 Arbeitsdruck führt, wird das Vorsteuerventil 24 über die geöffnete Zweigleitung 28a angesteuert, so daß der Kolben 19 des Sperrventils 18 — da die erste Hauptsteuerleitung 12 und damit der Druckraum 38 des Sperrventils nunmehr entlastet sind — von seinem Sitz abhebt und den Rückfluß aus dem Zylinderraum 1a freigibt. Bei dieser Öffnungsbewegung ist nur die Kreisringfläche F 2 des Kolbens 19 vom Verdrängungsdruck aus dem Zylinderraum 1a beaufschlagt.

Die Rohrbruchsicherung 7 ist für wahlweise externe oder interne Vorsteuerung dadurch eingerichtet, daß in der Zweigleitung 28a ein Stopfen 49 vorgesehen ist, der diese Leitung absperrt, wenn an die Leitung 28 das Zweiwegeventil 45 angeschlossen ist, und der gelöst wird, wenn für die interne Vorsteuerung der Eingang 29 für die Leitung 28 geschlossen wird. Es versteht sich, daß bei der internen Vorsteuerung, bei der das Vorsteuerventil 24 im Normalbetrieb nicht angesteuert ist, das « Atmen » des Zylinders 1 durch Abspritzen von Druckflüssigkeit über das Druckbegrenzungsventil 42 erfolgt, die ebenso wie bei Leckageverluste im Zylinder über das Rückschlagventil 50 ersetzt wird.

## Ansprüche

1. Hydraulische Steuerung mit Rohrbruchsicherung für einen doppelt wirkenden Antriebszylinder (1) zum Verstellen und zur Lagesicherung eines eine betriebsbedingte Gegenkraft auf den Kolben des Zylinders ausübenden Maschinenteils, insbesondere einer angetrieben Führungsrolle in der Strangführung einer Stranggießanlage, mit einer Hochdruckwelle (8) für einstellbaren, konstanten hydraulischen Arbeitsdruck, gekennzeichnet durch

1.1 ein Hauptsteuerventil (11) in den beiden zum Antriebszylinder (1) führenden Hauptsteuerleitungen (12, 13) mit zwei Schaltstellungen (I, II) zum wechselweisen Steuern der Leitungen auf Arbeitsdruck und Rücklauf, und mit einer Schaltstellung (III) zum Entlasten mindestens einer der beiden Hauptsteuerleitungen bei Rohrbruch,

1.2 ein in der Nähe des Antriebszylinders (1) angeordnetes leckagefreies Sperrventil (18) in Cartridge-Bauart mit einem Druckraum (38), in dem eine auf den Ventilkolben (19) wirkende Druckfeder (20) angeordnet ist, innerhalb der ersten, normalerweise Arbeitsdruck führenden Hauptsteuerleitung (12), deren Arbeitsdruck entgegengesetzt zur betriebsbedingten Gegenkraft wirkt, die auf dem Kolben (2) des Antriebszylinders normalerweise lastet,

1.3 dessen Ventilkolben (19) drei Steuerflächen hat, nämlich

a) eine größte Kolbenfläche (F 1), die in Schließrichtung federbelastet ist,

b) eine Kreisringfläche (F 2) innerhalb eines Ringraumes (21), der ausgangsseitig über einen Leitungsfortsatz (12a) der ersten Hauptsteuerleitung mit dem korrespondierenden Arbeitsdruckraum (1a) im Antriebszylinder kommuniziert, und

c) eine sitzseitige Stirnfläche (F 3), in deren Druckraum (22) die erste, ständig Arbeitsdruck führende Hauptsteuerleitung (12) einmündet,

wobei die größte Kolbenfläche (F 1) gleich der Summe der beiden anderen Kolbenflächen (F 2 + F 3) ist, so daß der Ventilkolben (19) ausschließlich unter dem leichtem Druck der auf die größte Kolbenfläche einwirkenden Druckfeder (20) schließt und geschlossen gehalten wird, wenn alle Kolbenflächen vom gleichen hydraulischen Druck beaufschlagt sind,

1.4 ein parallel zum Sperrventil (18) angeordnetes und gleichsinnig federbelastetes Rückschlagventil (50) zwischen dem Leitungsfortsatz (12a) ausgangsseitig vom Sperrventil (18) und der ersten Hauptsteuerleitung (12),

1.5 ein leckagefreies Vorsteuerventil (24) in der Nähe des Sperrventils (18), dessen Schieber (25) in einer Stellrichtung über eine Vorsteuerleitung (28) von einem normalerweise anstehenden und bei Rohrbruch wegfallenden Vorsteuerdruck beaufschlagt und in der anderen Stellrichtung federbelastet ist und dessen der Druckfeder (30) zugeordneter Druckraum (31) mit der ersten Hauptsteuerleitung (12) kommuniziert,

1.5.1 wobei der Schieber (25) in einer normalen Betriebsstellung bei anstehendem Vorsteuerdruck den eingangsseitigen Arbeitsdruck aus der ersten Hauptsteuerleitung (12) ausgangsseitig in eine Leitung (37) freigibt, die in den Druckraum (38) des Sperrventils (18) einmündet, und

1.5.2 wobei der Schieber in einer Rohrbruchstellung bei weggefallenem Vorsteuerdruck den eingangsseitigen Arbeitsdruck aus der ersten Hauptsteuerleitung (12) absperrt und die zum Druckraum (38) des Sperrventils (18) führende Leitung (37) mit einer zum Ringraum (21) des Sperrventils (18) mit der Kreisringfläche (F 2) führenden Leitung (36) verbindet,

1.6 einen über ein Rückschlagventil (40) an den Leitungsfortsatz (12a) der den Arbeitsdruck führenden ersten Hauptsteuerleitung (12) zwischen dem Ringraum (21) des Sperrventils und dem korrespondierenden Arbeitsdruckraum (1a) im Antriebszylinder (1) angeschlossenen Druckhaltespeicher (41) und durch

1.7 ein Druckbegrenzungsventil (42) zwischen dem Leitungsfortsatz (12a) ausgangsseitig vom Sperrventil (18) und der zweiten Hauptsteuerleitung (13) zur Maximaldruckbegrenzung.

2. Steuerung nach Anspruch 1; dadurch gekennzeichnet, daß das Vorsteuerventil (24) zum Absperren der ersten Hauptsteuerleitung (12) ein Sitzringventil (27) aufweist.

3. Steuerung nach Anspruch 1, gekennzeichnet durch ein volumetrisches Strömungsmeßgerät (46) in der ersten Hauptsteuerleitung (12) mit einem Signalgeber, der bei Rohrbruch in der Hauptsteuerleitung (12) ein Signal zum Entlasten der zum Vorsteuerventil (24) führenden, normalerweise Vordruck führenden Vorsteuerleitung (28) und zur Schaltung des Hauptsteuerventils (11) in die die beiden Hauptsteuerleitungen (12, 13) entlastende Schaltstellung (III) abgibt.

4. Steuerung nach Anspruch 1, gekennzeichnet durch eine absperrbare Zweigleitung (28a) zwischen der Zweiten Hauptsteuerleitung (13) und der Vorsteuerleitung (28).

**Claims**

1. Hydraulic control with pipe fracture safeguard, for a double-acting working cylinder (1) which adjusts and locks in position a machine component which produces an operational counter-pressure on the piston of the cylinder, said component being, in particular, a driven guide roller in the strand guide section of a continuous caster, said working cylinder (1) having a high-pressure shaft (8) for adjustable, constant hydraulic working pressure, the hydraulic control being characterized by

1.1 a main control valve (11) in the two main control lines (12, 13) leading to a working cylinder (1) with two operating positions (I, II) for alternating control of the pipes for working pressure and return and with an operating position (III) for releasing the pressure in at least one of the two main control pipes in the event of pipe fracture,

1.2 a leakage-free check valve (18) mounted near the working cylinder (1), of cartridge design with a pressure chamber (38) incorporating a compression spring (20) acting on the valve spool (19), said check valve (18) being located within the first main control line (12), which normally supplies the working pressure, the working pressure of which acts opposite to the operational counter-force which normally bears on the piston (2) of the working cylinder,

1.3 the valve spool (19) of which check valve (18), which has three control surfaces, namely

a) the largest spool land (F 1) which is spring-loaded in closing direction,

b) a circular ring land (F 2) within an annular chamber (21) which communicates at the outlet side via a pipe continuation (12a) of the first main control line with the corresponding working pressure chamber (1a) in the working cylinder, and

c) a seat-side end land (F 3), into the pressure chamber (22) of which the first main control line (12), which continuously supplies working pressure, leads, whereby the largest spool land (F 1) is equal to the sum of the two other spool lands (F 2 + F 3) so that the valve spool (19) closes exclusively as a result of the slight pressure of the compression spring (20) acting on the largest spool land, and thus remains closed if all the spool lands are receiving the same hydraulic pressure,

1.4 a spring-loaded non-return valve (50) in the same direction arranged parallel to the check valve (18) between the pipe continuation (12a) at the outlet side of the check valve (18) and the first main control line (12),

1.5 a leakage-free pilot valve (24) located near the check valve (18), the spool (25) of which pilot valve (24) is subject to pilot pressure in one direction via a pilot line (18), such pilot pressure existing under normal conditions and disappearing in the event of pipe fracture, and is spring-loaded in the other direction, the compression spring (30) of which is located in a pressure chamber (31) which communicates with the first main control line (12),

1.5.1 whereby the spool (25) in its normal operating position with applied pilot pressure releases the intake-side working pressure from the first main control line (12) to the outlet side into a pipe (37) which leads into the pressure chamber (38) of the check valve (18), and

1.5.2 whereby the spool (25), in its pipe fracture position with the pilot pressure removed, blocks off the intake-side working pressure from the first main control line (12) and connects the pipe (37) leading to the pressure chamber (38) of the check valve (18) with a pipe (36) leading to the annular chamber (21) of the check valve (18) with the circular ring land (F 2),

1.6 an accumulator connected via a non-return valve (40) to the pipe continuation (12a) of the working pressure-supplying first main control line (12) between the annular chamber (21) of the check valve and the corresponding working pressure chamber (1a) in the working cylinder (1), and by

1.7 a pressure relief valve (42) between the pipe continuation (12a) at the outlet side of the check valve (18) and the second main control line (13), for maximum-pressure limitation.

2. Control system in accordance with Claim 1, characterized by the fact that the pilot valve (24) features a ring seat valve (27) for shutting off the first main control line (12).

3. Control system in accordance with Claim 1, characterized by a volumetric flow gauge (46) in the first main control line (12) with a signal transmitter which emits a signal in the event of pipe fracture in the main control line (12) to release the normal pilot pressure in the pilot line (28) leading to the pilot valve (24) and to switch the main control valve (11) to the release position (III) for depressurizing the two main control lines (12, 13).

4. Control system in accordance with Claim 1, characterized by a branch pipe (28a) which can be shut off, located between the second main control line (13) and the pilot line (28).

**Revendications**

1. Commande hydraulique avec sécurité contre la rupture de conduite pour un vérin d'entraînement (1) à double action pour le réglage et la sécurité de position d'un élément de machine exerçant une force antagoniste, conditionnée par le service, sur le piston du vérin, en particulier un rouleau de guidage entraîné dans le guidage de la barre d'une installation de coulée continue, avec un arbre haute pression (8) pour une pression de travail hydraulique constante réglable caractérisée par

1.1 une vanne-pilote principale (11) dans les 2 conduites-pilotes principales (12, 13) amenant au vérin d'entraînement (1) avec 2 positions de commutation (I, II) pour la commande alternée des conduites sur pression de travail et retour et avec une position de commutation (III) pour décharger au moins une des 2 conduites-pilote principales en cas de rupture de conduite,

1.2 une vanne d'arrêt (18) exempte de fuite disposée à proximité du vérin d'entraînement (1) en construction Cartridge avec une chambre de pression (38), renfermant un ressort de pression (20) agissant sur le piston à vanne (19), à l'intérieur de la première conduite-pilote principale (12) transportant normalement la pression de travail, dont la pression de travail s'exerce en sens opposé par rapport à la force antagoniste conditionnée par le service appliqué normalement au piston (2) du vérin d'entraînement,

1.3 dont le piston à vanne (19) comporte 3 surfaces de distribution, soit

a) une surface de piston (F 1) la plus grande chargée par ressort dans le sens de la fermeture,

b) une surface d'anneau de cercle (F 2) à l'intérieur d'une chambre annulaire (21) communicant du côté sortie avec la chambre de pression de travail (1a) correspondante par l'intermédiaire d'un prolongement de conduite (12a) de la première conduite-pilote principale et

c) une surface frontale (F 3) du côté du siège dans la chambre de pression (22) de laquelle débouche la conduite-pilote principale (12) transportant en permanence la pression de travail,

la plus grande surface de piston (F 1) étant égale à la somme des 2 autres surfaces de piston (F 2 + F 3) de sorte que le piston à vanne (19) ferme et reste fermé exclusivement sous la faible pression du ressort de pression (20) agissant sur la plus grande surface de piston lorsque la même pression hydraulique s'applique sur toutes les surfaces de piston,

1.4 une soupape anti-retour (50) disposée parallèlement par rapport à la vanne d'arrêt (18) est chargée par ressort de même sens entre le prolongement de conduite (12a) du côté sortie de la vanne d'arrêt (18) et de la première conduite-pilote principale (12),

1.5 une soupape-pilote (24) exempte de fuite à proximité de la vanne d'arrêt (18) sur le tiroir (25) de laquelle s'applique dans un sens de réglage normalement une pression pilote par l'intermédiaire d'une conduite-pilote (28) est supprimée en cas de rupture de conduite et dans l'autre sens de réglage chargée par ressort et dont la chambre de pression (31) attribuée au ressort de pression (30) communique avec la première conduite-pilote principale (12),

1.5.1 le tiroir (25) libérant dans une position de service normal et en cas de présence de la pression pilote, la pression de travail côté entrée à partir de la conduite-pilote principale (12) côté sortie dans une conduite (37) débouchant dans la chambre de pression (38) de la vanne d'arrêt (18), et

1.5.2 le tiroir bloquant, dans une position de rupture de conduite en cas de supression de la pression pilote, la pression de travail côté entrée de la première conduite-pilote principale (12) et reliant la conduite (37) amenant vers la chambre de pression (38) de la vanne d'arrêt (18) par une conduite (36) amenant vers la chambre annulaire (21) de la vanne d'arrêt (18) avec la surface d'anneau de cercle (F 2),

1.6 un accumulateur de maintien de pression (41) relié au prolongement de conduite (12a) de la conduite-pilote principale (12) transportant la pression de travail entre la chambre annulaire (21) de la vanne d'arrêt et la chambre de pression de travail (1a) correspondante dans le vérin d'entraînement et par

1.7 une vanne de limitation de pression (42) entre le prolongement de conduite (12a) du côté sortie de la vanne d'arrêt (18) et la deuxième conduite-pilote principale (13) vers la limitation de pression maximale.

2. Commande suivant la revendication 1, caractérisée par le fait que la vanne-pilote (24) présente une soupape à siège annulaire (27) pour la fermeture de la première conduite-pilote principale (12).

3. Commande suivant la revendication 1, caractérisée par le fait qu'un appareil de mesure volumétrique du flux (46) dans la première conduite-pilote principale (12) avec un émetteur de signal émettant en cas de rupture de conduite dans la conduite-pilote (12) un signal pour décharger la conduite-pilote (28) transportant normalement la pression-pilote et conduisant vers la vanne-pilote (24) et pour la commutation de la vanne-pilote principale (11) dans la position de commutation (III) déchargeant les 2 conduites-pilotes principales (12, 13).

4. Commande suivant la revendication 1, caractérisée par une conduite dérivée blocable (28a) entre la deuxième conduite-pilote principale (13) et la conduite-pilote (28).

# FIG. 1

# FIG. 2